# EUROPEAN PATENT APPLICATION

(11) **EP 2 819 278 A1**
(43) Date of publication of application: **31.12.2014**
(21) Application number: 13751414.7
(22) Date of filing: 14.02.2013
(51) Int. Cl.: H02K 9/02, H02K 5/18, H02K 11/00

(54) **MECHATRONICALLY INTEGRATED ELECTRIC MOTOR, AND METHOD FOR ASSEMBLING MECHATRONICALLY INTEGRATED ELECTRIC MOTOR**

(30) Priority: 24.02.2012 JP 2012038391; 29.08.2012 JP 2012189285
(71) Applicant: Nissan Motor Company, Limited, Kanagawa-ku Yokohama-shi Kanagawa 221-0023 (JP)
(72) Inventor: HIRANO, Hiroyuki, Atsugi-shi Kanagawa 243-0123 (JP); SUZUKI, Kenta, Atsugi-shi Kanagawa 243-0123 (JP); NAKAYAMA, Hiroyuki, Atsugi-shi Kanagawa 243-0123 (JP); SASAKI, Kensuke, Atsugi-shi Kanagawa 243-0123 (JP)
(74) Representative: Osha Liang SARL
(86) International application number: PCT/JP2013/000820
(87) International publication number: WO 2013/125188

(57) **Abstract**

There is provided an electromechanical integrated motor with improved assembly workability. A power-converter housing (2) includes: a radiator wall (18) with a surface on a motor housing (10) side thereof to which a power conversion module is attached; and an outer cylinder wall (15) extending further toward the motor housing (10) side compared with the radiator wall (18) while being disposed on the outer periphery of the power conversion module. The radiator wall (18) and the outer cylinder wall (15) are formed as separate members.

## Description

### Technical Field

The present invention relates to an electromechanical integrated motor in which a motor housing for housing a stator and a rotor, and a power-converter housing for housing a power conversion module are connected, and a method of assembling the electromechanical integrated motor.

### Background Art

Electromechanical integrated motor has a structure described in PTL 1, for example. In the electromechanical integrated motor described in PTL 1, an inverter housing 301 having a closed-end cylindrical shape is coaxially joined to a partition plate 202, which forms a motor housing. In addition, a power module as a power conversion module is fixed to an inner surface of a radiator plate 302 of the inverter housing 301, where the inner surface is facing the partition plate 202.

Moreover, an opening 304 is formed in an inverter frame 301a, which allows the inside of the inverter housing 301 to be watched. By using the through-hole for operation provided as the opening 304, it is possible to fasten together each lead conductor 213 from the motor and a corresponding one of output terminals 316 of the power module by a bolt. PTL 1 describes that this structure facilitates the operation for joining each lead conductor 213 and the corresponding output terminal 316 together.

### Citation List

### Patent Literature

PTL 1: JP 2008-211945 A

### Summary of Invention

### Technical Problem

However, it is assumable that the joining part located inside the inverter housing 301 cannot always be checked easily only through the through-hole for operation (the opening 304) formed in the inverter frame 301a located around the outer-peripheral of the power module, in some cases. In such a case, the above-described joining operation may sometimes be difficult to be carried out under dim light.

The present invention has been made in view of the above-described aspect, and has an object to provide an electromechanical integrated motor with improved workability of assembly and a method of assembling the electromechanical integrated motor.

### Solution to Problem

To solve the above-described problem, in an aspect of the electromechanical integrated motor of the present invention, a power-converter housing includes a radiator wall with a surface on a power-housing side to which a power conversion module is attached, and a cylindrical outer-peripheral wall disposed on an outer-peripheral of the power conversion module, extending toward the power-housing side rather than the radiator wall. In addition, the radiator wall and the outer-peripheral wall are provided as different members.

### Advantageous Effects of Invention

According to the aspect of the present invention, the structure of enabling the radiator wall and the outer-peripheral wall to be separated can provide a large workspace for assembly without requiring any through-hole in the outer-peripheral wall. This consequently makes it possible to provide an electromechanical integrated motor with improved workability of assembly.

### Brief Description of Drawings

FIG. 1 is a cross-sectional view of a motor unit according to an embodiment based on the present invention;
FIG. 2 is a view depicting an example of arrangement of power elements;
FIG. 3 is a view illustrative of an example of assembling of a power-converter chamber;
FIG. 4 is a view illustrative of Modified Example 1;
FIG. 5 is a view illustrative of Modified Example 2;
FIG. 6 is a view depicting details of a motor-chamber wall in Modified Example 2;
FIG. 7 is a view illustrative of Modified Example3;
FIG. 8 is a view depicting an example of arrangement of power elements in Modified Example 3;
FIG. 9 is a view depicting an example of application of a motor unit to an in-wheel motor;
FIG. 10 is a view illustrative of rotational move of the radiator wall;
FIG. 11 is a view illustrative of an example of a stopper;
FIG. 12 is a view illustrative of an example of terminals; and
FIG. 13 is a view illustrative of another example of the terminals.

### Description of Embodiments

Embodiments of the present invention will now be described with reference to the drawings.

### (Structure of Motor Unit)

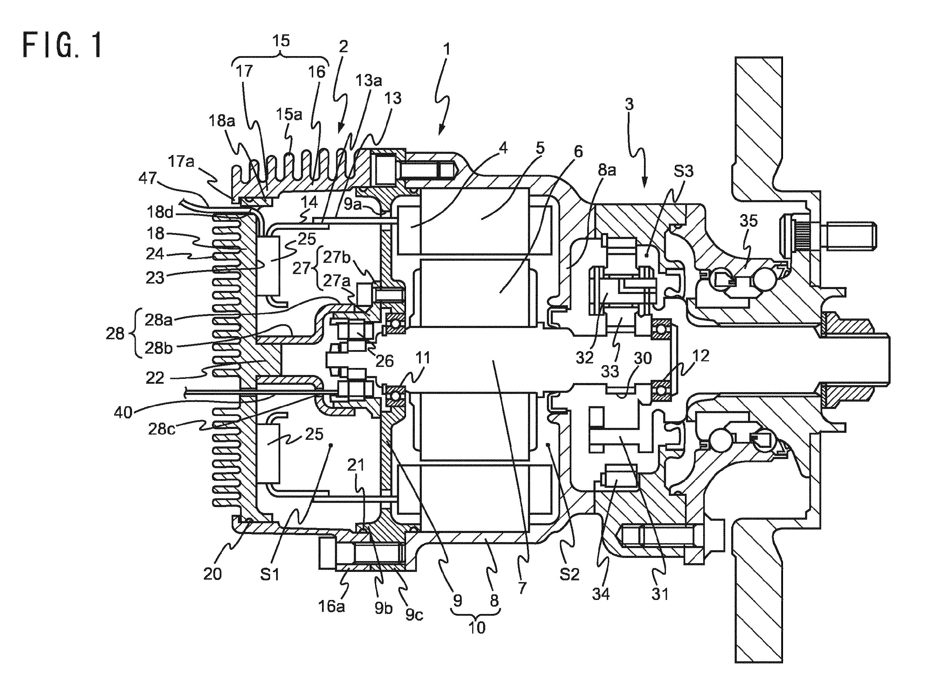

FIG. 1 is a cross-sectional view of a motor unit including an electromechanical integrated motor of this embodiment.

As illustrated in FIG. 1, the motor unit of this embodiment is formed by joining together a motor 1, a power-converter chamber S1 formed by a power-converter housing 2, and a speed reducer 3. In particular, the unit part including the motor 1 and the power-converter chamber S1 forms the electromechanical integrated motor.

The motor 1 includes a stator 5 (stator) with motor coils 4, a rotor 6 (rotor), and a rotor shaft 7 for rotationally supporting the rotor 6. The stator 5 and the rotor 6 are housed in a motor housing 10.

The motor housing 10 includes a motor-housing main body 8 having a closed-end cylindrical shape, and a motor-chamber wall 9 for closing an opening of the motor-housing main body 8. The motor-chamber wall 9 is disposed on the side with the opening of the motor-housing main body 8 being opposite to the opening side of the motor-housing body 8, and is fixed to the motor-housing main body 8 by bolts. In this way, a motor chamber S2 is formed as a housing space surrounded by the motor-housing main body 8 and the motor-chamber wall 9.

The rotor shaft 7 is disposed so as to pass through a central portion of a bottom wall 8a of the motor-housing main body 8 and a central portion of the motor-chamber wall 9. One end portion of the rotor shaft 7 is supported rotatably via a first bearing 11 at an opening in the center of the motor-chamber wall 9. The other end portion of the rotor shaft 7 extends to the speed reducer 3 side, and is supported rotatably by a second bearing 12. The bottom wall 8a of the motor-housing main body 8 also serves as a wall for a speed-reducer chamber S3.

The rotor 6 and the stator 5 are disposed on the outer-peripheral side of the rotor shaft 7 in the motor chamber S2. Moreover, through-holes 9a for leader lines are opened in an outer-peripheral portion of the motor-chamber wall 9, and each coil lead wire 13 extending from a corresponding one of the motor coils 4 of the stator 5 passes through a corresponding one of the through-holes 9a for leader lines, and then extends to the inside of the power-converter chamber S1. A stator coil terminal 13a, which corresponds to a tip portion of each of the coil lead wires 13, is connected to an AC terminal 14 forming an output terminal of a corresponding one of power elements 25 to be described later, in the power-converter chamber S1.

The power-converter chamber S1 is a space for housing a power conversion module configured by the power elements 25, a capacitor, a PWM drive circuit (not illustrated), a bus bar (not illustrated) for providing power to these components, and the like. The power-converter chamber S1 is a housing space surrounded by the motor-chamber wall 9 and the power-converter housing 2. One end of a DC cable 47 as a power supply cable is connected to the bus bar electrically connected to the power elements 25 and the like. The DC cable 47 is led out to the power-converter chamber S1 through a cable outlet 18d formed in the power-converter housing 2. Specifically, the cable outlet 18d is formed in a radiator wall 18 to be described later.

The power-converter housing 2 includes two separate members, i.e., an outer cylinder wall 15 and the radiator wall 18, which is connected to the outer cylindrical wall 15. The power-converter housing 2 of this embodiment is formed to have a closed-end cylindrical shape with an opening toward the motor housing 10, by detachably connecting the outer cylinder wall 15 with the radiator wall 18.

The outer cylinder wall 15 is a cylindrical member for dividing the position of the outer periphery of the power-converter chamber S1. The outer cylinder wall 15 of this embodiment has a circular cylindrical shape. The outer cylinder wall 15 is disposed coaxially with the motor housing 10, and is joined, on the right end side with an opening, to the motor housing 10 by bolts. Specifically, in this embodiment, the outer cylinder wall 15 is fastened to the motor-chamber wall 9 with bolts.

Here, the motor-chamber wall 9 and the radiator wall 18 are coaxially disposed so as to face each other. The motor-chamber wall 9 includes, in an outer-peripheral portion thereof, a flange part 9b receiving the inner-diameter surface of the outer cylinder wall 15, and an outer-cylinder-wall abutting part 9c projecting further in the external-diameter direction rather than the flange part 9b. The diameter of the motor-chamber wall 9 at the position in which the flange part 9b is formed is set to be the same as or larger than the outer-peripheral diameter of the radiator wall 18. Moreover, the cable outlet 18d for leading out the DC cable 47 is formed in an outer-peripheral portion of the radiator wall 18. The cable outlet 18d is formed of a through-hole or a cutout as described above, and the space formed by the cable outlet 18d is sealed with an unillustrated sealing member after routing of the cable.

Furthermore, the outer cylinder wall 15 in a cylindrical shape includes an outer-cylinder-wall main body 16, which is provided on the motor-chamber wall 9 side, and a radiator-wall connection part 17, which is continuous with the outer-cylinder-wall main body 16 and is in contact with an outer-peripheral end face of the radiator wall 18. The inner diameter of the radiator-wall attachment part 17 is formed to be the same as or approximately the same as the diameter of the outer-peripheral end surface of the radiator wall 18. Note that the end portion of the radiator-wall connection part 17 is formed to be an inner-peripheral-surface folded part 17a having a diameter smaller than that of the outer-peripheral end surface of the radiator wall 18. Moreover, the inner diameter of the outer-cylinder-wall main body 16 is set to be larger than or equal to the inner diameter of the radiator-wall attachment part 17. This enables the outer cylinder wall 15 to be assembled to the motor-chamber wall 9 after the attachment of the radiator wall 18 to the motor-chamber wall 9. FIG. 1 illustrates, as an example, a case in which the inner diameter of the outer-cylinder-wall main body 16 is larger than the inner diameter of the radiator-wall attachment part 17.

The outer cylinder wall main body 16 includes, in an end portion thereof, a flange part 16a abutting on the outer-cylinder-wall abutting part 9c of the motor-chamber wall 9. A bolt hole is formed in each of the flange part 16a and the outer-cylinder-wall abutting part 9c, and a bolt is screwed into the bolt holes to be tightened, thereby fixing the outer cylinder wall 15 to the motor-chamber wall 9. Note that part of the outer-peripheral of the outer cylinder wall 15 is also provided with a fin 15a for radiation.

Sealing members 20 and 21 such as O-rings are attached respectively to the outer-peripheral end surface of the radiator wall 18 and an upper surface of the flange part 9b of the motor-chamber wall 9, to secure water resistance of the power-converter chamber S1. Note that the water resistance of a hole through which signal wires pass in the radiator wall 18 to be described later is secured using a sealing member such as packing.

The radiator wall 18 includes an inner surface, which faces the motor-chamber wall 9, and an outer surface, which is on the other side (outer side) of the inner surface.

On the inner surface of the radiator wall 18, a support projection 22 and a power-conversion-module attachment surface 23 are formed. The support projection 22 projects from a central portion of the radiator wall 18 toward the motor-chamber wall 9. On the inner surface of the radiator wall 18, the circular surface portion positioned around the outer periphery of the support projection 22 forms the power-conversion-module attachment surface 23.

On the outer surface of the radiator wall 18, a fin 24 for radiating heat from the power conversion module to the outside is formed.

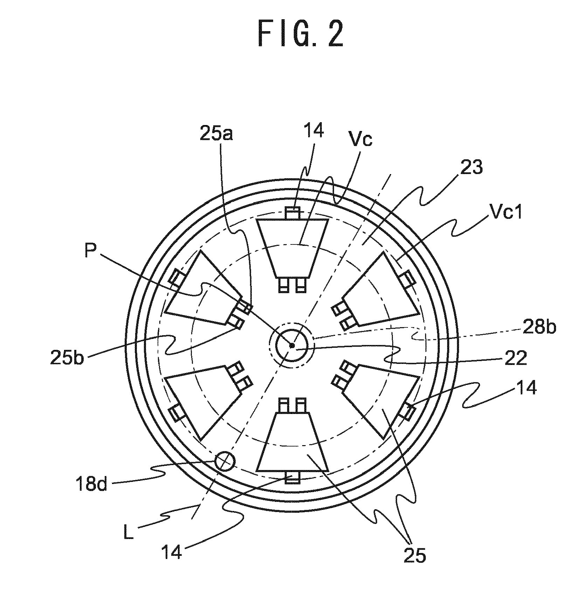

High-heat generating components, such as the power elements 25, a capacitor, and the like, forming the power conversion module are attached to the attachment surface 23 of the radiator wall 18. FIG. 1 and FIG. 2 illustrate the power elements 25 as an example of the power conversion modules attached to the attachment surface 23.

Here, each numeral 14 denotes an AC terminal, a numeral 25a denotes a ground terminal, and a numeral 25b denotes a DC terminal.

In a state where the radiator wall 18 and the outer cylinder wall 15 are joined together, the power conversion modules are positioned in the power-converter chamber S1, and the outer cylinder wall 15 is disposed on the outer-peripheral side of the power conversion modules attached to the radiator wall 18.

Here, multiple power elements 25 are prepared, the number of which is determined according to the number of poles and the number of parallel circuits in the motor 1. The power elements 25 are fixed to the inner surface of the radiator wall 18 by bonding, using screws, or the like. FIG. 2 illustrates an example of arrangement of the power elements 25. As illustrated in FIG. 2, to dispose the multiple power elements 25 efficiently, it is preferable to align the multiple power elements 25 in a circle, for example, along a virtual circle Vc having a center P of the radiator wall 18 as the center, at every predetermined angle. In this embodiment, the power elements 25 are disposed so that the AC terminals 14 would be positioned on the virtual circle Vc with the center P of the radiator wall 18 as the center. In this case, it is often likely that a central portion of the radiator wall 18 is to be wasted. However, in this embodiment, the central portion of the radiator wall 18 is used effectively for the function of supporting the radiator wall 18 rotationally movably, to have a structure that can contribute to reducing the motor unit in size.

The DC terminals of the multiple power elements 25 are electrically connected to the unillustrated bus bar. One end of the DC cable 47 is connected to the bus bar. The DC cable 47 is led to the outside through the cable outlet 18d formed in the radiator wall 18.

Here, in this embodiment, as illustrated in FIG. 2, the multiple power elements 25 are attached to the radiator wall 18 so as to be aligned axisymmetrically about a straight line L passing the rotation center P of the radiator wall 18 and the central portion of the cable outlet 18d.

The radiator wall 18 of this embodiment has such a structure that the outer periphery thereof is joined to the outer cylinder wall 15 while the central portion thereof is supported by the motor-chamber wall 9 of the motor housing 10.

Next, the structure for supporting the radiator wall 18 and the like will be described.

The right end portion side of the rotor shaft 7 is supported by the motor-chamber wall 9 via the first bearing 11, and the tip portion of the rotor shaft 7 is positioned on the motor-chamber wall 9 side. A rotation detector 26 is disposed around the outer periphery of the tip portion of the rotor shaft 7, and the rotation detector 26 is attached to the motor-chamber wall 9 by using a rotation-detector holding bracket 27.

The rotation-detector holding bracket 27 includes a bracket main body 27a, which is formed of a cylinder having an inner diameter larger than the diameter of the tip portion of the rotor shaft 7, and an outward flange 27b, which is formed at an opening in a right end of the bracket main body 27a. The rotation detector 26 is attached to the inner-diameter surface of the bracket main body 27a. The rotation-detector holding bracket 27 with the rotation detector 26 attached thereto is disposed so that the tip portion of the rotor shaft 7 would be inserted coaxially into the rotation-detector holding bracket 27 on the inner-diameter side thereof, and the outward flange 27b is fixed to the motor-chamber wall 9 by using a bolt. In other words, the rotation-detector holding bracket 27 is provided in a central portion of the motor-chamber wall 9.

An extension column 28, which is formed of a cylinder, is attached coaxially to the bracket main body 27a of the rotation-detector holding bracket 27. The extension column 28 includes a major-diameter part 28a, which is attached around the outer-peripheral surface of the bracket main body 27a, and an extension-part main body 28b extending from the major-diameter part 28a toward the radiator wall 18. The major-diameter part 28a is fixed to the outer-diameter surface of the bracket main body 27a by press fit or the like, for example. It is preferable that the bracket main body 27a and the major-diameter part 28a have an integral structure. The extension-part main body 28b extends to the position where the inner surface of the radiator wall 18 is disposed. A concave part having a circular cross section is formed at a tip portion of the extension-part main body 28b, and has such a diameter that the support projection 22 can be press-fitted to the concave part.

By attaching the radiator wall 18 so that the support projection 22 would be inserted into the concave part at the tip portion of the extension-part main body 28b, the radiator wall 18 has a structure of being supported by the motor-chamber wall 9 with the extension column 28 provided therebetween. For example, by setting the inner diameter of the extension-part main body 28b (diameter of the concave part) at the same diameter as that of the support projection 22, which allows the support projection 22 to be pressed into the extension-part main body 28b, the radiator wall 18 can be supported rotatably and movably by the motor-chamber wall 9 with the extension column 28, when the support projection 22 is press-fitted to the extension-part main body 28b. Note that the support projection 22 and the extension-part main body 28b may be fixed to each other by using a bolt or the like having the axis in the axial direction, after the insertion and positioning of the support projection 22.

Here, the structure for joining the extension-part main body 28b and the support projection is not limited to the above-described one. The extension-part main body 28b and the support projection may be screwed together by using a bolt. Alternatively, such a structure in which the support projection 22 is formed in a cylindrical shape and the extension-part main body 28b would be press-fitted into the support projection 22 may be employed. It is, of course, preferable that the radiator wall 18 can be supported rotatably and movably.

Note that, the support projection 22 and the extension-part main body 28b may be circular, or polygonal or the like, in cross section. When the support projection 22 and the extension-part main body 28b have circular cross sections, positioning keys may be used.

Moreover, the radiator wall 18 is in such a shape that the outer-peripheral end surface would be in contact with the inner-diameter surface of the outer cylinder wall 15. This allows the radiator wall 18 to be disposed coaxially in the outer cylinder wall 15, and also the outer-peripheral end surface of the radiator wall 18 to abut on the surface of the outer cylinder wall 15.

Here, the radiator wall 18 of this embodiment includes, in the outer-peripheral portion, an axial-direction extension cylinder part 18a extending along the inner surface of the outer cylinder wall 15. An outer-peripheral surface of the axial-direction extension cylinder part 18a is configured for being in contact with the inner surface of the radiator-wall attachment part 17 of the outer cylinder wall 15. This increases the area in which the outer-peripheral wall and the outer cylinder wall 15 are in contact with each other, and enables the outer cylinder wall 15 to facilitate guiding for sliding the radiator wall 18 at the time of attaching the radiator wall 18.

In addition, in FIG. 1, the speed reducer 3 is provided on the right of the motor 1.

The speed reducer 3 includes a mechanism for reducing the output rotation speed of the motor 1 to a predetermined reduction ratio. In this embodiment, description will be given by taking planetary gears as an example of the speed reduction mechanism. Planetary gears are housed in a speed-reducer housing. Specifically, a gear (sun gear 30) for transmitting power to the speed reducer 3 is integrally formed around the other end portion side of the rotor shaft 7. Moreover, a pinion gear 33 is attached to a carrier 31, which also serves as an output axis, so that the pinion gear 33 can rotate around a pinion shaft 32, and a ring gear 34 is fixed to the housing for the speed reducer 3 with some flexibility. The rotation of the motor 1 is input from the sun gear 30 to the speed reducer 3, and is then transmitted to the pinion gear 33. The pinion gear 33 is also engaged with the ring gear 34. Accordingly, revolution of the pinion gear 33 along the ring gear 34 at a reduced speed is reflected to the rotation of the carrier 31 (output axis), consequently reducing the rotation speed to the predetermined reduction ratio. In FIG. 1, a numeral 35 denotes a hub bearing.

### (Installation of Power-converter Housing 2 (Assembly of Power-converter Chamber S1 side))

Next, description will be given of installation of the power-converter housing 2 to the motor 1 and assembly of the power-converter chamber S1 side.

Here, a through-hole 28c for wiring is opened in an inclined portion of the extension column 28, the inclined portion being positioned in a connection part between the major-diameter part 28a and the extension-part main body 28b.

The rotation-detector holding bracket 27 with the rotation detector 26 attached thereto is attached to the motor-chamber wall 9 coaxially with the rotor shaft 7. The rotation detector 26 may be attached to the rotation-detector holding bracket 27 after the attachment of the rotation-detector holding bracket 27.

Then, the extension column 28 is coaxially attached to the rotation-detector holding bracket 27. In this attachment, the extension column 28 is attached after a signal wire 40 of the rotation detector 26 is passed through the through-hole 28c for wiring formed in the extension column 28. The extension column 28 may be attached to the rotation-detector holding bracket 27 in advance.

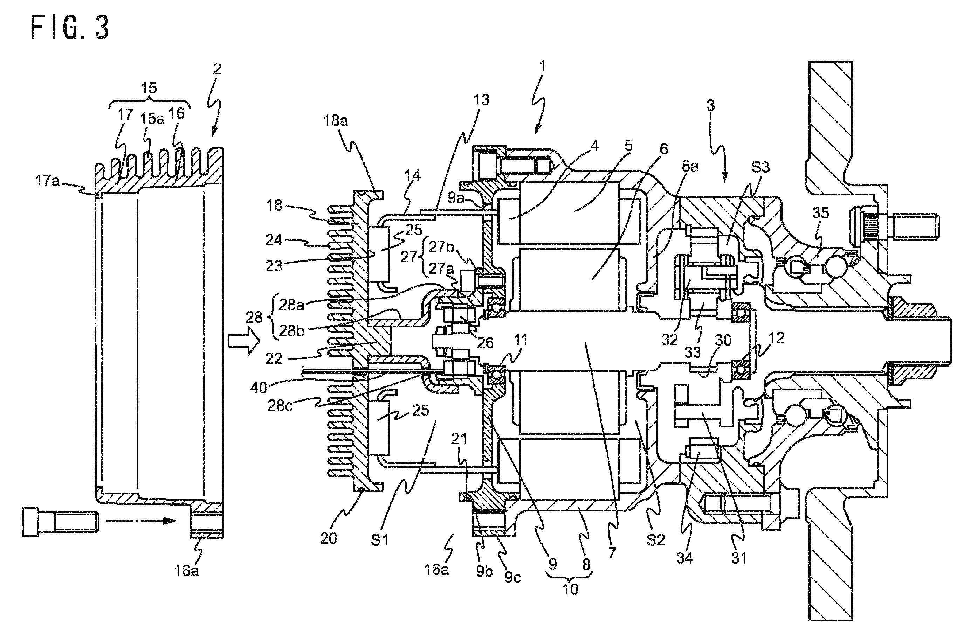

Then, as illustrated in FIG. 3, the support projection 22 of the radiator wall 18 with the power conversion modules attached thereto, is joined to the extension-part main body 28b of the extension column 28. In this way, the radiator wall 18 comes into a state of being supported by the motor-chamber wall 9 with the extension column 28.

Moreover, at this stage, the signal wire 40 of the rotation detector 26 is passed through the through-hole formed in the radiator wall 18, and routed to the outside.

Then, operation for connecting wires positioned in the power-converter chamber S1 is carried out.

In this operation, as illustrated in FIG. 3, the power-converter chamber S1 is exposed all around in 360° in a circumferential direction since the outer cylinder wall 15 is not attached yet. This can facilitate operations that need to be carried out inside the power-converter chamber S1, such as the operation for connecting wires.

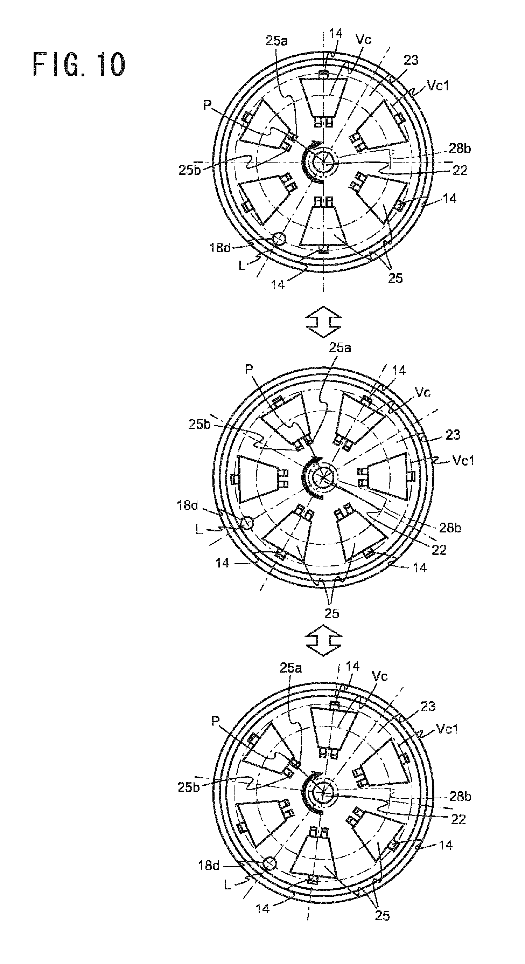

Moreover, in this operation, as illustrated in FIG. 10, the radiator wall 18 is rotationally moved around the extension-part main body 28b, i.e., rotationally moved while having the extension-part main body 28b as an axis, to adjust the positions of the power conversion modules in the circumferential direction. Specifically, when the positions of the AC terminal 14 of each of the power elements 25 and a corresponding one of the stator coil terminals 13a are displaced in the circumferential direction, the positions of the AC terminal 14 of each of the power elements 25 and the corresponding stator coil terminal 13a are caused to match by rotationally moving the radiator wall 18 by an angle corresponding to the displacement. In this way, the AC terminals 14 and the stator coil terminals 13a come to a state of being in contact with each other without fail. Note that conductors of the power elements 25 and the stator coil terminals 13a may be fixed by pressure welding, using bolts or clips, or the like as needed, after the adjustment of the position of the radiator wall 13 in the circumferential direction by rotationally moving the radiator wall 18.

When the above-described wiring operation and the like are finished, the outer cylinder wall 15 is attached, and the assembly operation is completed. As for the assembly of the outer cylinder wall 15, the outer cylinder wall 15 is attached by being slid from the left in FIG. 3 to pass along the outer-peripheral surface of the radiator wall 18 as illustrated in FIG. 3, and being then attached to the motor-chamber wall 9 by bolts.

At this stage, the flange part 9b formed in an end portion of the outer-cylinder-wall main body 16 abuts on the outer-cylinder-wall abutting part 9c of the motor-chamber wall 9, and the inner-diameter surface, on the motor-chamber wall 9 side, of the outer-cylinder-wall main body 16 is received and supported by the flange part 9b of the motor-chamber wall 9.

Then, by fastening the flange part 16a of the outer-cylinder-wall main body 16 and the outer-cylinder-wall abutting part 9c to each other by a bolt, the outer cylinder wall 15 is fixed to the motor-chamber wall 9.

Moreover, in the state where the outer cylinder wall 15 is attached as described above, the inner-peripheral-surface folded part 17a restricts move of the radiator wall 18 in the detaching direction. Accordingly, even if the press-fitting part of the extension column 28 is loosened unexpectedly, detachment of the radiator wall 18 can be prevented.

As has been described, with the structure of the motor unit of this embodiment, the function of supporting the radiator wall 18 on the outer peripheral portion of the power-converter chamber S1 is not needed. Accordingly, it is possible to assemble the radiator wall 18 to the motor housing 10 before assembling the outer cylinder wall 15. This allows the outer-peripheral position of the power-converter chamber S1 to be exposed all around, at the stage of having the radiator wall 18 assembled. Consequently, there is no member that disturbs the operation for connecting AC power wires between the power elements 25 (power conversion modules) and the motor coils 4, and the like, which improves work efficiency. Moreover, the wiring operation can be watched for check, which provides an effect of preventing occurrence of defective products, and the like.

Furthermore, by routing the signal wire 40 of the rotation detector 26 to the outside of the rotation-detector holding bracket 27, occurrence of deficiencies such as breaking of the wire caused by coming in contact with the rotating rotor shaft 7, and the like, can be prevented.

Here, it is preferable that the rotational move of the radiator wall 18 with respect to the outer cylinder wall 15 be stopped by a stopper after the attachment of the outer cylinder wall 15 to the motor-chamber wall 9 by using a bolt as described above.

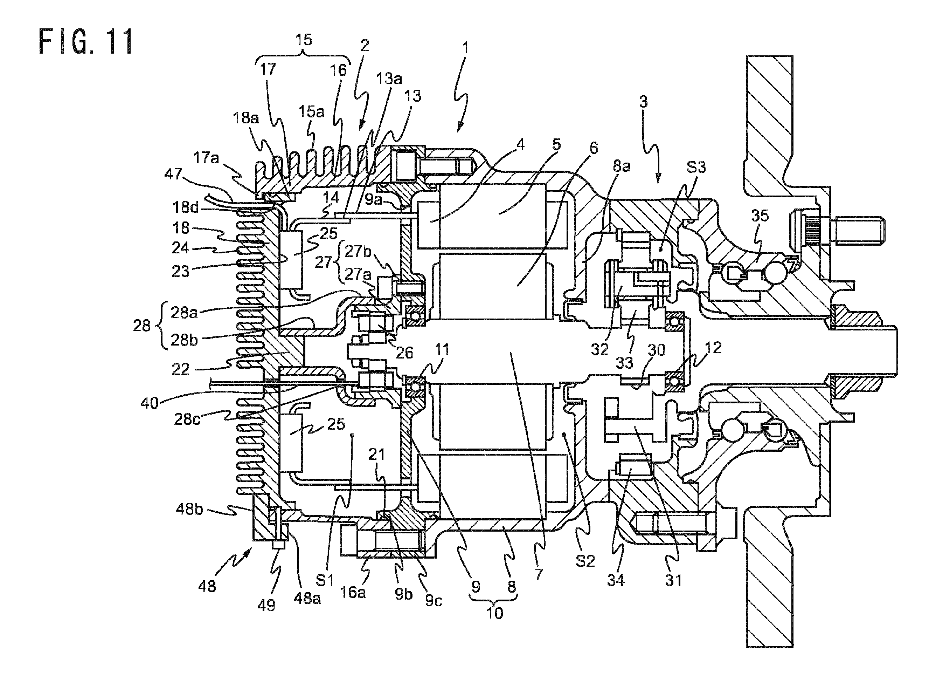

FIG. 11 illustrates an example in which the rotational move of the radiator wall 18 with respect to the outer cylinder wall 15 is stopped by the stopper. In this example, the stopper includes an L-shaped bracket 48 and a bolt 49.

As illustrated in FIG. 11, in a state where the L-shaped bracket 48 is disposed so that one side 48a of the L shape would abut on the outer cylinder wall 15 while the other side 48b of the L shape would be pressed toward the outer surface of the radiation wall 18, the one part 48a of the L-shaped bracket 48, the outer cylinder wall 15, and the radiator wall 18 are screwed together by the bolt 49 in the radial direction of the outer cylinder wall 15.

In this way, the rotational move of the radiator wall 18 with respect to the outer cylinder wall 15 is stopped. It is preferable that a concave part and a convex part be provided for the other part 48b of the L-shaped bracket 48 and the outer surface of the radiator wall 18, to restrict sliding between both components 48b and 18.

### (Modified Example 1)

Next, Modified Example 1 of this embodiment will be described.

In the above-described embodiment, the case in which the rotation-detector holding bracket 27 and the extension column 28 are formed by separate members and the extension column 28 is attached to the rotation-detector holding bracket 27, has been given as an example.

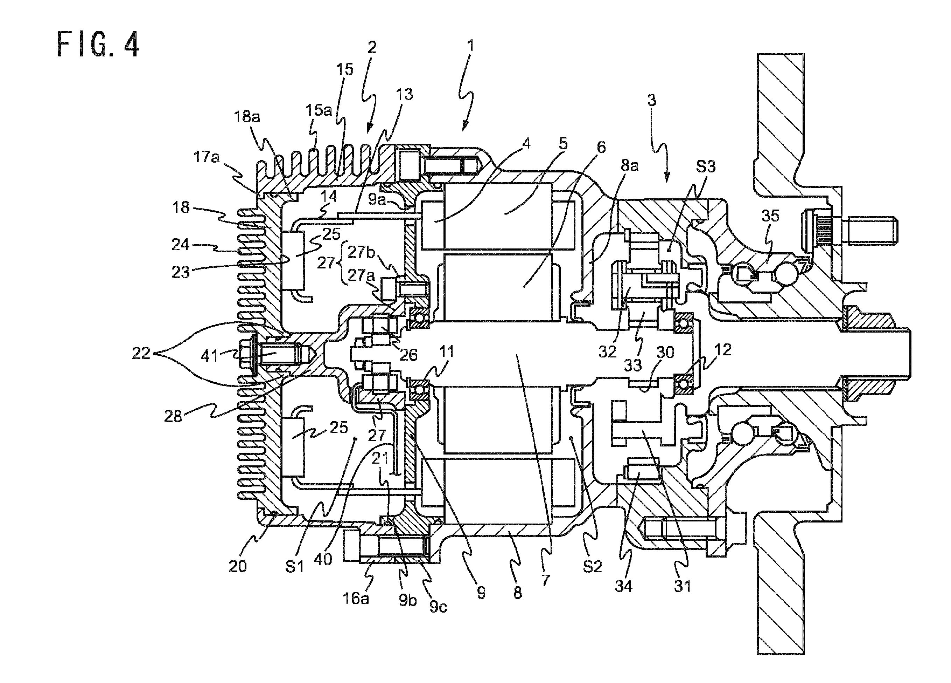

In Modified Example 1 below, the rotation-detector holding bracket 27 and the extension column 28 may be formed integrally as illustrated in FIG. 4.

Specifically, in Modified Example 1, the extension column 28 extending to the radiator 18 is formed integrally with the cylindrical rotation-detector holding bracket 27.

In this case, with the integral structure of the rotation-detector holding bracket 27 and the extension column 28 formed integrally, the number of parts to be processed and assembled is reduced although the shape of the rotation-detector holding bracket 27 becomes somewhat complicated. As a result, advantages such as reducing the costs of components and facilitating attachment of the outer-peripheral wall due to an increase in the accuracy of holding the radiator wall 18 (in the axial direction and the diameter direction) can be obtained.

Moreover, although the structure for joining the extension column 28 and the radiator wall 18 together may be the one described in the above-described embodiment, another joining structure is given as an example here in FIG. 4.

The joining structure illustrated in FIG. 4 is such a structure that the support projection 22 to be provided in the central portion of the radiator wall 18 would be formed in a cylindrical shape, a tip portion of the extension column 28 would be fitted into the cylindrical support projection 22, and the radiator wall 18 and the tip portion of the extension column 28 would be joined together by using a bolt 41 from the outside of the radiator wall 18.

By employing the structure of securely fastening the radiator wall 18 and the extension column 28 with the bolt 41 in addition to the integral structure of the rotational-detector holding bracket 27 and the extension column 28 as described above, an attachment structure part likely to be affected easily by external force such as fixing by pressing is eliminated, consequently improving reliability as a motor unit.

Here, also in this modified example, by routing the signal wire 40 of the rotation detector 26 out from the rotation-detector holding bracket 27, it is possible to prevent the signal wire 40 from loosening around the rotor shaft 7 and thereby to prevent occurrence of deficiencies such as breaking of the wire due to being in contact with the rotating rotor shaft 7.

### (Modified Example 2)

Next, Modified Example 2 of this embodiment will be described.

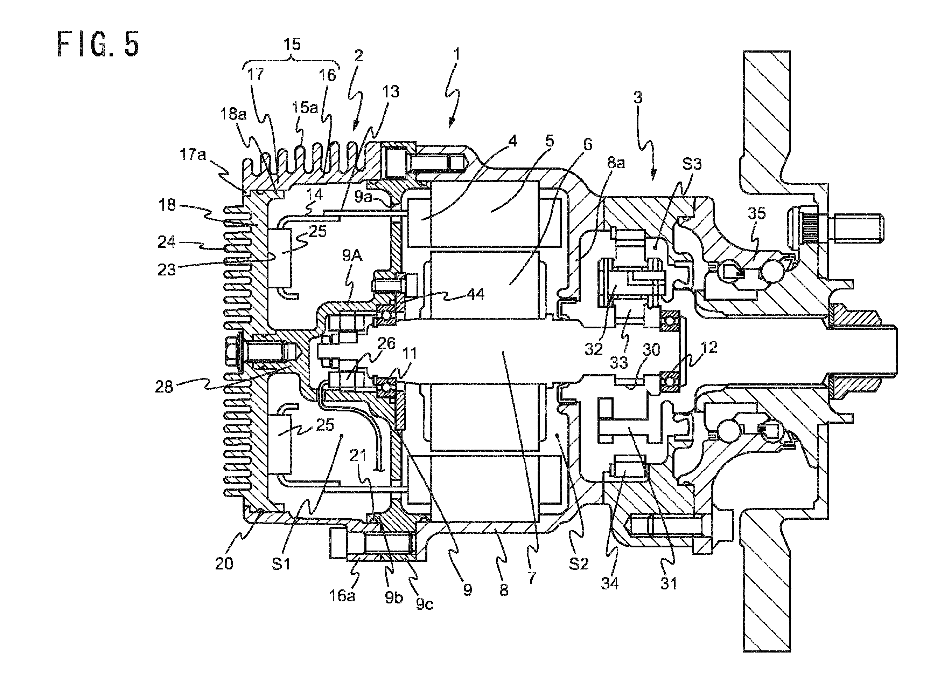

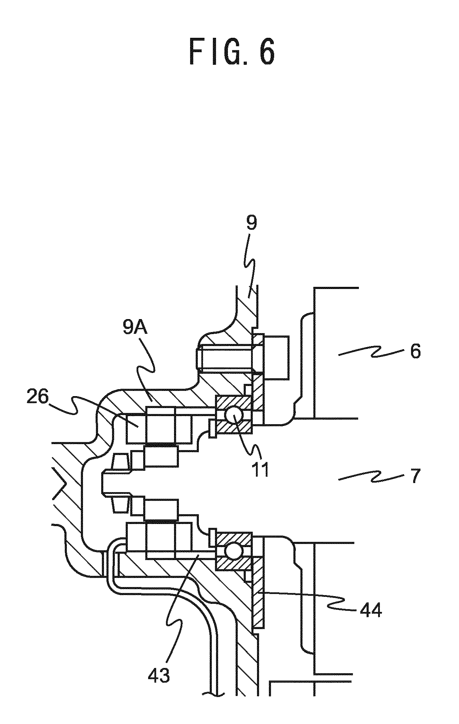

Modified example 2 is an example of a structure in which the attachment part of the rotation detector 26 and the extension column 28 are integrally formed with the motor-chamber wall 9 itself, as illustrated in FIG. 5 and FIG. 6.

Specifically, as illustrated in FIG. 6, by processing a central portion of the motor-chamber wall 9 to have a shape of protruding toward the radiator wall 18, a pouched space is provided on the inner-perihperal side of a protrusion part 9A thus formed. Then, the first bearing 11 and the attachment part of the rotation detector 26 are formed in the pouched space, and a tip portion of a protrusion part 43 is further extended toward the radiator wall 18 to form the extension column 28.

In FIG. 6, the numeral 43 denotes a rotation-detector falling stopper ring. The rotation-detector falling stopper ring 43 is a component for preventing the rotation detector 26 from moving in the axial direction. In addition, a first-bearing presser plate 44 is disposed on the inner-surface side of the motor-chamber wall 9, and the first-bearing presser plate 44 is fastened to the motor-chamber wall 9 by using bolts. The presser plate for the first-bearing 11 prevents the first bearing 11 from falling in the axial direction. Here, to assemble these components to the pouched space, the rotation detector 26, the rotation-detector falling stopper ring 43, the first bearing 11, and first-bearing presser plate 44 are assembled in this order from the inner-back side of the pouched space.

Here, it is preferable that the rotation-detector falling stopper ring 43 be lightly press-fitted to the motor-chamber wall 9, and not move in the axial direction.

In the structure of Modified Example 2, integrally forming the extension column 28 for supporting the radiator wall 18 and the motor-chamber wall 9 can minimize the number of components. As a result, employing this structure provides a structure that is advantageous in terms of costs. Moreover, since the number of component processing tolerances to be involved is reduced, the accuracy of holding the radiator wall 18 is improved significantly.

### (Modified Example 3)

Next, Modified Example 3 of this embodiment will be described.

The basic structure is similar to that of the above-described embodiment. However, the structure of Modified Example 3 is different in that multiple columns 45 each extending toward the motor housing 10 are provided on the radiator wall 18.

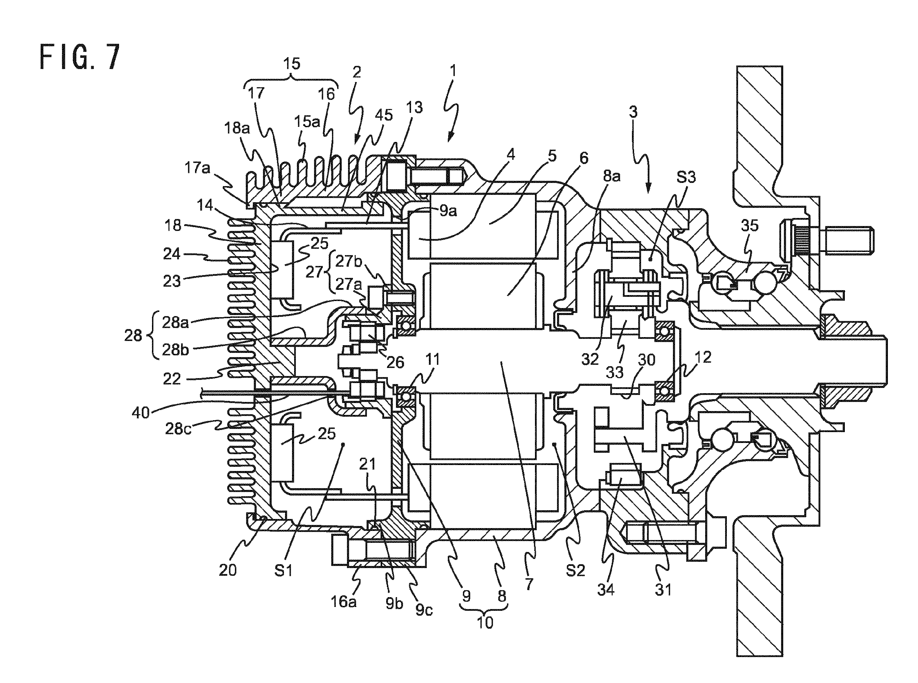

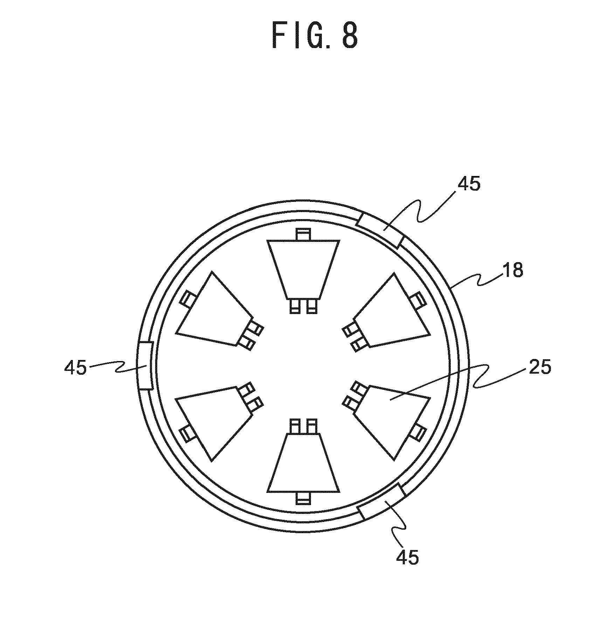

As illustrated in FIG. 7 and FIG. 8, the multiple columns 45 are disposed at a position that is on the outer-peripheral side of the power conversion modules and on the inner side of the outer-peripheral wall. Moreover, a tip portion of each of the columns 45 is supported by the motor-chamber wall 9. Specifically, the outer surface of the tip portion of the column 45 abuts on an inner surface of the flange part 9b of the motor-chamber wall 9, whereby the tip portion of the column 45 is supported by the motor-chamber wall 9.

It is preferable that the multiple columns 45 be disposed at regular intervals in the circumferential direction. Moreover, the number of columns 45 may be set in consideration of workability in the operations in the power-converter chamber S1.

With this structure, a structure in which the outer-peripheral portion of the radiator wall 18 is also supported by the motor-chamber wall 9 is provided in addition to the structure of supporting the central portion of the radiator wall 18. Hence, for example, even if unexpected external force from the left in the drawings is exerted, the radiator wall 18 can be prevented from tilting, thereby securing the waterproof function and the like.

Here, multiple cylindrical pieces each positioned on the outer-peripheral portion of the radiator wall 18 and extending in the axial direction are provided as the columns 45. With the columns 45, it is possible to prevent the radiator wall 18 from falling by securing the contact length (contact area) with the outer cylinder wall 15, and to obtain effects of improving the performance of radiation to the outside as the entire unit by improving heat transfer performance from the radiator wall 18 to the outer cylinder wall 15.

### (Modified Embodiment 4)

The contact structure for wiring the stator coil terminal 13a formed by the tip portion of each of the coil lead wires 13 and the AC terminal 14 forming the output terminal of a corresponding one of the power element 25 in the power-converter chamber S1 is not limited to that illustrated in FIG. 1.

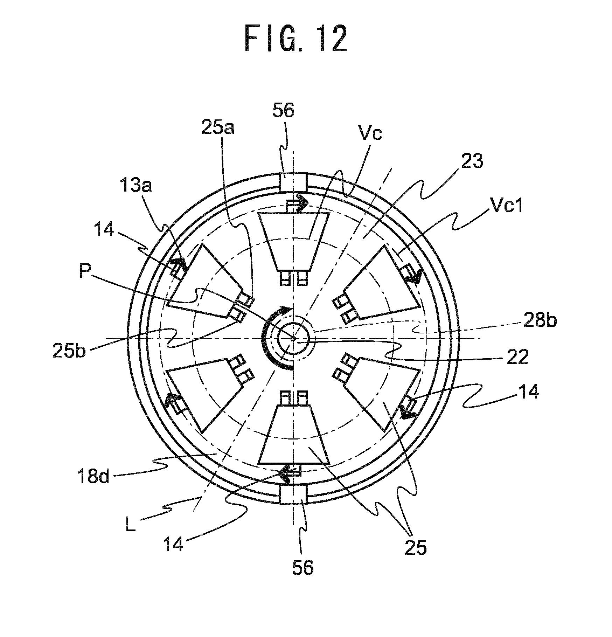

The structure illustrated in FIG. 12 illustrates, as an example, a case in which each of the stator coil terminals 13a and the AC terminal 14 of the corresponding power element 25 are disposed so as to be connected with each other while facing each other in the radial direction of a circle having the rotation axis of the rotational move of the radiator wall 18 as the center.

Note that, in FIG. 12, the outer cylinder wall 15 is illustrated. However, at the time of rotationally moving the radiator wall 18, the outer cylinder wall 15 is not assembled yet. Moreover, FIG. 12 is a schematic view taken by seeing through from the outside, and the power elements 25 and the AC terminals 14 are not visible from the outside in actual. Furthermore, each numeral 56 denotes a wedge-shaped key inserted between the radiator wall 18 and the outer cylinder wall 15 after the attachment of the outer cylinder wall 15. FIG. 12 illustrates an example of prohibiting the radiator wall 18 from being rotationally moved with respect to the outer cylinder wall 15 by inserting the keys 56.

Here, in this embodiment, the rotation axis of the rotational move of the radiator wall 18 and the axis of the rotor shaft 7 are disposed so as to match. Although the rotation axis of the rotational move and the axis of the rotor shaft 7 do not necessarily match, it is preferable that they match.

In this modified example, as illustrated in FIG. 12, each of the stator coil terminals 13a and the AC terminal 14 of the corresponding power element 25 are disposed to face each other in the circumferential direction of a circle having the rotation axis of the rotational move of the radiator wall 18 as the center, i.e., in the same direction as that of the arrangement of the multiple power elements 25.

Here, each of the stator coil terminals 13a is formed in a plate shape. The stator coil terminal 13a is disposed so as to have the plate-thickness direction thereof in the arrangement direction, and is formed by being bent into a polygonal shape. FIG. 3 illustrates, as an example, a case of forming each of the stator coil terminals 13a to be in a dogleg shape in the arrangement direction.

In this case, only by rotationally moving the radiator 18, the AC terminal 14 of each of the power elements 25 comes to a state of being pressed to the corresponding stator coil terminal 13a, resulting in a state where the AC terminal 14 of each of the power elements 25 and the corresponding stator coil terminal 13a are securely in contact with each other. Both of the terminals may be pressed to each other to such an extent that a spring action would occur.

Moreover, by forming each of the stator coil terminals 13a by being bent into a polygonal shape, the rigidity of the stator coil terminals 13a is improved, which makes it possible for the AC terminal 14 of each of the power elements 25 and the corresponding stator coil terminal 13a to be in contact with each other more securely.

Here, the output terminals may also be formed by being bent to improve the rigidity. However, since the coil lead wires 13 are led out and extended, it is preferable that the rigidity on the stator coil terminals 13a side be increased. Note that a portion of each of the coil lead wires 13 led out to the power-converter chamber S1 may also be formed by being bent to have a polygonal shape, to increase the rigidity.

### (Modified Example 5)

Modified Example 5 described above illustrates, as an example, the case of improving the rigidity of the terminals by bending each of the plate-shaped terminals into a polygonal shape.

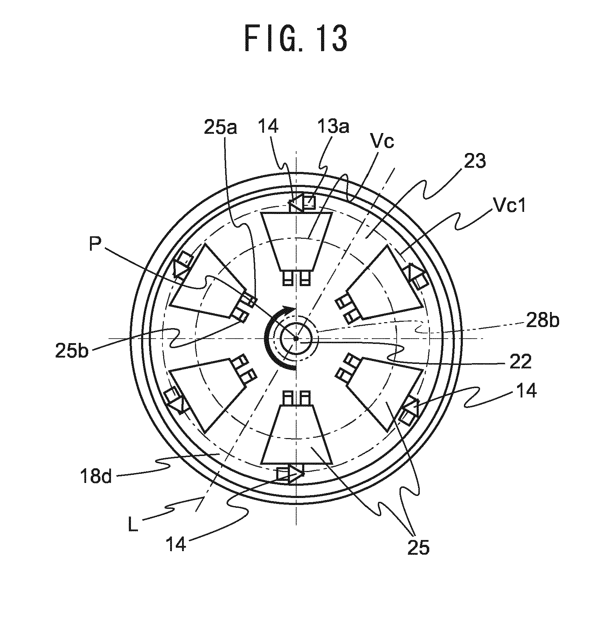

As illustrated in FIG. 13, Modified Example 5 illustrates a case of processing each of the corresponding terminals to have a polygonal cross section. Specifically, FIG. 13 illustrates an example of processing each of the AC terminals 14 to have a triangular cross section while processing each of the stator coil terminals 13a to have a rectangular cross section. This example enables the rigidity of the terminals to be increased more than that in Modified Example 3 described above. Note that the terminals are in contact with each other at the surfaces thereof in the example illustrated in FIG. 13.

### (Application Example)

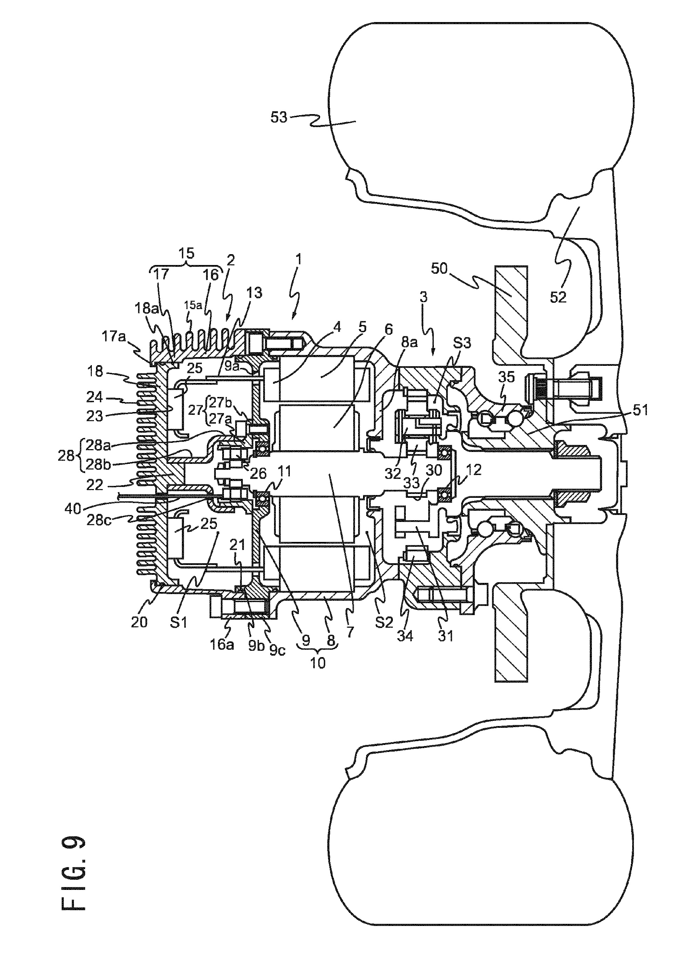

FIG. 9 is a view depicting an example of application of a motor unit having an electromechanical integrated motor with a structure as the above-described one.

This example illustrates a case of applying a motor unit having an electromechanical integrated motor into an in-wheel motor. Here, a numeral 50 denotes a brake disc, a numeral 51 denotes a hub flange, a numeral 52 denotes a wheel, and a numeral 53 denotes a tire.

Here, in the above-described embodiment, description has been given on the basis of an example in which the speed reducer 3 is also joined to the electromechanical integrated motor. However, this structure is also applicable to a case of an electromechanical integrated motor not having the speed reducer 3.

Here, the outer cylinder wall 15 corresponds to an outer-peripheral wall. The extension column 28 forms an extension part. The axial-direction extension cylinder part 18a forms an extending part. The DC cable 47 forms a power supply cable. The power elements 25 form power conversion modules.

### (Effects of Invention)

Next, effects of this embodiment will be described.
(1) The radiator wall 18, to which the power conversion modules such as the power elements 25 are attached, and the outer cylinder wall 15 for dividing the outer-peripheral side of the power-converter chamber S1, are formed as separate members.
   With this structure, the power conversion modules including the power elements 25, the capacitor, and the like, which are heat generators, is disposed at a position that is away from the motor chamber S2, which is also a heat generation source, and that is the outermost part advantageous for radiation to the outside.
   Moreover, the separate structure of the radiator wall 18 and the outer cylinder wall 15 makes it possible to secure a large work space, which improves the workability of assembly.
(2) The motor housing 10 includes the motor-chamber wall 9 facing the radiator wall 18, and the extension column 28 extending from the motor-chamber wall 9 toward the radiator wall 18. Moreover, the extension column 28 is joined to the radiator wall 18 at a more central position of the radiator wall 18 than the power-conversion-module attachment position 23.

With this structure, the radiator wall 18 can be supported by the motor-chamber wall 9 with the extension column 28 provided therebetween, which enables the outer cylinder wall 15 to be attached after the radiator wall 18.

As a result, the operation for connecting the AC wires between the power elements 25 and the motor coils 4 can proceed reliably while being watched, which improves work efficiency. Moreover, since it is exposed all around in the circumferential direction, the occurrence of defective products due to errors in the wiring operation can be prevented. Further, since no through-hole for operation needs to be formed in the outer cylinder wall 15, the rigidity of the housing can be prevented from decreasing. Furthermore, since processing of multiple through-holes for operation is not needed, the component costs can be reduced. Furthermore, by reducing the number of places on which sealing (water-proofing) operation is to be performed after the wiring operation, effects such as improving the reliability of durability of the drive unit can be obtained.

Moreover, the member for supporting and fixing the radiator wall 18 is disposed in the central portion of the radiator wall 18. Consequently, it is possible to make good use of the central portion of the radiator wall 18, although the central portion is often assumed to be a wasted space since it is difficult to use when the multiple power elements 25 are disposed in an annular shape. This enables reduction of the electromechanical integrated motor in size.

(3) The rotation-detector holding bracket 27 for the rotor 6 for holding the rotation detector 26 for the rotor 6 is provided to the motor-chamber wall 9, and the extension column 28 is provided to the rotation-detector holding bracket 27 for the rotor 6.

With this structure, the radiator wall 18 can be supported only by adding the extension column 28 to the rotation-detector holding bracket 27 attached to the motor-chamber wall 9. Consequently, this structure can be provided without requiring any significant change in design or any significant increase in the costs.

(4) The rotation-detector holding bracket 27 for the rotor 6 and the extension column 28 are formed integrally.

With this structure, the extension column 28 is configured to integrally project from the rotation-detector holding bracket 27 attached to the motor-chamber wall 9, which prevents the number of components from increasing. Consequently, it is possible to prevent an increase in costs and the assembly operation from becoming poor.

(5) The extension column 28 is integrally formed on the motor-chamber wall 9.

With this structure, the member for supporting the radiator wall 18 is directly and integrally extended from the motor-chamber wall 9. Consequently, since the rotation-detector holding bracket 27 is not needed, the costs can be reduced, and the number of places to be processed, which may cause assembly errors, can be reduced. Hence, the accuracy of the position at which the radiator wall 18 is held is improved, and hence the attachment of the outer cylinder wall 15 is facilitated.

(6) The radiator wall 18 includes the multiple columns 45 each extending toward the motor housing 10. The multiple columns 45 are disposed at a position that is closer to the outer periphery of the radiator wall 18 than the power conversion modules are, and that is on the inner side of the outer cylinder wall 15, while the tip portions of the columns 45 are supported by the motor-chamber wall 9.

With this structure, the columns 45 each integrally passing from the radiator wall 18 through the inside of the outer cylinder wall 15 are provided. Consequently, although the workability of wiring between the power elements 25 and the motor coils 4 may be made somewhat worse, the rigidity for supporting the radiator wall 18 is improved by the multipoint support. As a result, it is possible to provide a structure less likely to be impaired in case of emergency such as application of impact load to the radiator wall 18 from the outside.

(7) The extension column 28 includes a hollow part, and the rotation detector 26 for the rotor 6 is positioned inside the hollow part. The signal wire 40 of the rotation detector 26 for the rotor 6 passes through the extension column 28, and then extends to the outside of the extension column 28.

With this structure, the signal wire 40 of the rotation detector 26 and the rotation axis (rotor shaft 7) are separated by using the rotation-detector holding bracket 27 and the member for supporting and fixing the radiator wall 18. Consequently, it is possible to prevent deficiencies such as breaking of the wire due to coming into contact with the rotor caused by loosening of the signal wire 40 or the like.

(8) The radiator wall 18 includes an axial-direction extension cylinder part 18a extending along the outer cylinder wall 15 on the outer-peripheral side of the power conversion modules, and the axial-direction extension cylinder part 18a is in contact with the outer cylinder wall 15.

With this structure, the axial-direction extension cylinder part 18a having a cylindrical shape or the like and extending in the axial direction is provided on the outer-peripheral portion of the radiator wall 18. This increases the contact area between the radiator wall 18 and the outer cylinder wall 15. Consequently, it is possible to compensate for the reduction in the heat transfer performance from the radiator wall 18 to the outer cylinder wall 15 caused by the division of the radiator wall 18 and the outer cylinder wall 15, which enables the radiation efficiency to the outside to be maintained or improved.

(9) The motor unit includes the speed reducer 3 for adjusting the output revolution speed (output torque) of the motor 1.

With this structure, it is possible to use this structure for a drive unit for the driving of an electric vehicle or the like, which provides effects of expanding the application range of this structure.

(10) The radiator wall 18 is supported in a state of being rotationally movable with respect to the motor housing 10. The multiple power elements 25 (power conversion modules) are attached to the surface, on the side provided with the motor housing 10, of the radiator wall 18 while being arranged along the virtual circle Vc having the rotation center P of the rotational move as the center.

With this structure, by rotating the radiator wall 18, it is possible to easily make fine adjustment to the peripheral-direction positions of the multiple power elements 25 attached at different angles.

Specifically, with the structure in which the power elements 25 are assembled in the circumferential direction of the stator 5 at multiple angles, it is possible to easily correct displacement between the stator coil terminals 13a and the AC terminals 14 of the power elements 25 in the circumferential direction.

Moreover, even for a unit having a different wire outlet position to the outside of the housing, it is possible to use this structure by rotationally moving the radiator wall 18.

(11) The cable outlet 18d for passing the DC cable 47 for providing power to the power conversion modules such as the power elements 25 is provided to the radiator wall 18. The multiple power elements 25 are disposed axisymmetrically about the straight line L passing the rotation center P of the rotational move and the cable outlet 18d.

With this structure, since the multiple power elements 25 are disposed axisymmetrically based on the cable outlet 18d, it is possible to apply this structure for a mirror-image unit, which is obtained by horizontally flipping the unit, for example. In other words, it is possible to be commonly used for both units for the right side and left side of vehicles.

(12) The stopper means for stopping the rotational move of the radiator wall 18 with respect to the outer cylinder wall 15 is included.

With this structure, although the radiator wall 18 and the outer cylinder wall 15 are separate members and the radiator wall 18 is rotationally movable, it is possible to more reliably prevent occurrence of positional displacement between the stator coil terminals 13a and the AC terminals 14 of the power elements 25 due to rotational move of the radiator wall 18 after the radiator wall 18 and the outer cylinder wall 15 are assembled to each other.

Moreover, joining the radiator wall 18 and the outer cylinder wall 15, which are separate members, increases the rigidity for supporting the power-converter housing after the assembly.

(13) Each of the stator coil terminals 13a led out from the stator 5 to the inside of the power-converter housing 2 and the AC terminal 14 of the corresponding power conversion module have portions facing each other in the arrangement direction of the multiple power conversion modules.

With this structure, it is possible to cause each of the stator coil terminals 13a and the AC terminal 14 of the corresponding power conversion module to abut on each other by pressure by rotationally moving the outer cylinder wall 15. Hence, it is possible to omit pressing operation for joining the stator coil terminal 13a and the AC terminal 14 of the power module4, and the like. This allows a workspace for the joining operation to be unnecessary.

(14) At least one of the stator coil terminal 13a and the AC terminal 14 is formed to have a polygonal cross section.

With this structure, the rigidity of the terminals increases, and the pressure to be applied to the terminals can be increased. Consequently, the stator coil terminal 13a and the AC terminal 14 of the power module can be joined together more reliably.

Note that it is preferable that the stator coil terminal 13a and the AC terminal 14 have surface contact with each other.

(15) The radiator wall 18 is joined to the tip portion of the extension column 28 extending from the motor-chamber wall 9 on the motor-converter housing 2 side of the motor housing in the direction being away from the motor housing, to face the motor-chamber wall. Then, each of the stator coil terminals 13a and the AC terminal 14 of the corresponding power-conversion-module are connected in the power-converter chamber formed in the power-converter housing. Thereafter, the outer cylinder wall 15 is moved from the radiator wall 18 side toward the motor-chamber wall 9, to cover the outer periphery of the power conversion modules with the outer cylinder wall 15.

With this structure, it is possible to secure a large workspace, which improves workability of assembly.

(16) The extension column 28 is joined to the radiator wall 18 at the position on the more central side than the position at which the power conversion modules are attached on the radiator wall 18.

With this structure, even if the radiator wall 18 is to be supported by the motor housing, the assembly operation can be performed while the radiator wall 18 is being exposed all around in the circumferential direction. Hence, assembly efficiency is improved.

(17) Since the radiator wall 18 is joined to the extension column 28 to be rotationally movable, the positions of each of the stator coil terminals 13a and the AC terminal 14 of the corresponding power-conversion-module are adjusted by rotationally moving the radiator wall 18 according to the positional displacement between the stator coil terminal 13a and the AC terminal 14 of the power-conversion-module, at the time of connecting the stator coil terminal 13a and the AC terminal 14 of the power-conversion-module.

With this structure, the operation for connecting the stator coil terminal 13a and the AC terminal 14 of the power-conversion-module is facilitated.

This application claims priority to JP 2012-38391 A (filed on February 24, 2012) and JP 2012-189285 A (filed on August 29, 2012), the entire content of which is incorporated in this disclosure by reference.

In the above, description has been given with reference to the limited number of embodiments. However, the scope of the invention is not limited to those, and it is apparent for those skilled in the art that modifications based on the disclosure can be made to the embodiments.

### Reference Signs List

- 1: Motor
- 2: Power-converter housing
- 3: Speed reducer
- 4: Motor coil
- 5: Stator
- 6: Rotor
- 7: Rotor shaft
- 8: Motor-housing main body
- 8a: Bottom wall
- 9: Motor-chamber wall
- 9a: Through-hole
- 9b: Flange part
- 9c: Outer-cylinder-wall abutting part
- 10: Motor housing
- 11: First bearing
- 12: Second bearing
- 13: Coil lead wire
- 13a: Stator coil terminal
- 14: AC terminal (output terminal)
- 15: Outer cylinder wall
- 16: Outer-cylinder-wall main body
- 16a: Flange part
- 17: Radiator-wall attachment part
- 17a: Inner-peripheral-surface folded part
- 18: Radiator wall
- 18a: Axial-direction extension cylinder part
- 20, 21: Sealing member
- 22: Support projection
- 23: Attachment surface
- 24: Fin
- 25: Power element (power conversion module)
- 16: Rotation detector
- 27: Rotation-detector holding bracket
- 27a: Bracket main body
- 27b: Flange
- 28: Extension column
- 28a: Major-diameter part
- 28b: Extension-column 28 main body
- 28c: Through-hole
- 40: Signal wire
- 41: Bolt
- 43: Protrusion part
- 45: Column
- 47: L-shaped bracket
- 49: Bolt
- 56: Key
- L: Straight line
- P: Rotation center
- Vc, Vc1: Virtual circle
- S1: Power-converter chamber
- S2: Motor chamber
- S3: Speed-reducer chamber

## Claims

1. An electromechanical integrated motor comprising:
a motor housing for housing a stator and a rotor; and
a power-converter housing for housing a power conversion module integrally joined to the motor housing, wherein
the power-converter housing comprising:
a radiator wall including the power conversion module attached to a surface on the motor-housing side of the radiator wall; and
an outer-peripheral wall having a cylindrical shape, extending further toward the motor-housing side rather than the radiator wall, and being disposed on an outer-peripheral side of the power conversion module, wherein
the radiator wall and the outer-peripheral wall are separate members.

2. The electromechanical integrated motor according to claim 1, wherein
the radiator wall is supported by the motor housing being capable of rotational move, and
a plurality of power conversion modules are attached to the surface on the motor-housing side of the radiator wall, being arranged along a virtual circle having rotation center of the rotational move as center.

3. The electromechanical integrated motor according to claim 2, wherein
the radiator wall includes a cable outlet for passing a power supply cable for supplying power to the power conversion modules, and
the plurality of power conversion modules are disposed axisymmetrically about a straight line passing the rotation center of the rotational move and the cable outlet.

4. The electromechanical integrated motor according to claim 2 or 3, the power-converter housing further comprising a stopper for stopping the rotational move of the radiator wall with respect to the outer-peripheral wall.

5. The electromechanical integrated motor according to any one of claims 2 to 4, wherein a stator coil terminal led from the stator to inside of the power-converter housing and an output terminal of each of the power conversion modules have portions facing each other in an arrangement direction of the plurality of power conversion modules.

6. The electromechanical integrated motor according to claim 5, wherein at least one of the stator coil terminal and the output terminal is formed to have a polygonal cross section.

7. The electromechanical integrated motor according to any one of claims 1 to 6, the motor housing comprising:
a motor-chamber wall facing the radiator wall; and
an extension part extending from the motor-chamber wall toward the radiator wall,
wherein the extension part is joined to the radiator wall at a more central position than a position where the power conversion modules are attached to the radiator wall.

8. The electromechanical integrated motor according to claim 7, wherein the motor-chamber wall is provided with a rotor-rotation-detector holding bracket for holding a rotor rotation detector, and the extension part is provided to the rotor-rotation-detector holding bracket.

9. The electromechanical integrated motor according to claim 8, wherein the rotor-rotation-detector holding bracket and the extension part are integrally formed.

10. The electromechanical integrated motor according to any one of claims 7 to 9, wherein the extension part is formed integrally with the motor-chamber wall.

11. The electromechanical integrated motor according to any one of claims 7 to 10, wherein
the radiator wall includes a plurality of columns each extending toward the motor-housing side, and
the plurality of columns are disposed closer to the outer-peripheral side of the radiator wall than the power conversion modules, on the inner side of the outer-peripheral wall, and
a tip portion of each of the columns is supported by the motor-chamber wall.

12. The electromechanical integrated motor according to any one of claims 7 to 11, wherein
the extension part includes a hollow part, and the rotor rotation detector is positioned in the hollow part, and
a signal wire of the rotor rotation detector passes through the extension part, and extends to outside of the extension part.

13. The electromechanical integrated motor according to any one of claims 1 to 12, wherein
the radiator wall includes an extension part extending along the outer-peripheral wall at a position closer to the outer-peripheral side of the radiator wall than the power conversion module or the power conversion modules are, and
the extension part and the outer-peripheral wall are in contact with each other.

14. An electromechanical-integrated-motor assembling method for assembling, to a motor housing for housing a stator and a rotor, a power-converter housing for housing a power conversion module electrically connected to a stator coil terminal led from the stator,
the power-converter housing including a radiator wall with a surface on a motor-housing side thereof to which the power conversion module is attached, as well as an outer-peripheral wall having a cylindrical shape, extending further toward the motor-housing side rather than the radiator wall while being disposed on an outer-peripheral side of the power conversion module,
the electromechanical-integrated-motor assembling method comprising:
joining the radiator wall to a tip portion of an extension part extending from a motor-chamber wall on a power-converter housing side of the motor housing in a direction being away from the motor housing, being disposed to face the motor-chamber wall; then
connecting the stator coil terminal and an output terminal of the power conversion module in a power-converter chamber formed in the power-converter housing; then
moving the outer cylinder wall from a radiator-wall side to a motor-chamber-wall side, to cover outer periphery of the power conversion module with the outer cylinder wall.

15. The electromechanical-integrated-motor assembling method according to claim 14, wherein the extension part is joined to the radiator wall at a more central position than a position where the power conversion module is attached to the radiator wall.

16. The electromechanical-integrated-motor assembling method according to claim 14 or 15, wherein
the radiator wall is joined to the extension part to be rotationally movable, and
positions of the stator coil terminal and the output terminal of the power conversion module are adjusted by rotationally moving the radiator wall according to a positional displacement between the stator coil terminal and the output terminal of the power conversion module, when connecting the stator coil terminal and
the output terminal of the power conversion module.
